(19)

Europäisches
Patentamt
European
Patent Office
Office européen
des brevets

(11) **EP 2 693 377 A1**

(12) **EUROPEAN PATENT APPLICATION**
published in accordance with Art. 153(4) EPC

(43) Date of publication:
**05.02.2014 Bulletin 2014/06**

(51) Int Cl.:
***G06Q 10/06*** (2012.01)

(21) Application number: **12763705.6**

(22) Date of filing: **23.03.2012**

(86) International application number:
**PCT/JP2012/002003**

(87) International publication number:
**WO 2012/132352 (04.10.2012 Gazette 2012/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2011 JP 2011072743**

(71) Applicant: **NEC Corporation
Tokyo 108-8001 (JP)**

(72) Inventors:
• **MORINAGA, Satoshi
Tokyo 108-8001 (JP)**
• **IMAMURA, Satoru
Tokyo 105-8574 (JP)**

(74) Representative: **Robson, Aidan John
Reddie & Grose LLP
16 Theobalds Road
London WC1X 8PL (GB)**

(54) **RISK-MANAGEMENT DEVICE**

(57) A risk management device includes a memory for storing actual total loss amounts of N periods, and a processor connected to this memory. The processor is programmed to determine whether actual levels showing confidence intervals of actual total loss amounts in a total loss amount distribution calculated by a risk weighing device follow a uniform distribution on an interval [0,1], by a goodness-of-fit test using order statistics for a uniform distribution.

FIG. 1

## Description

### TECHNICAL FIELD

The present invention relates to a risk management device, more specifically, relates to a risk management device which has a function of statistically verifying the validity of the result of weighing by a risk weighing device based on the total loss amount having occurred actually.

### BACKGROUND ART

In general, company business may face various kinds of operational risk (simply referred to as "risk" hereinafter) such as an earthquake, system trouble, a clerical mistake and fraud. Therefore, it is required to weigh the amount of risk by using a risk weighing device and take measures against the risk.

A risk weighing device inputs therein fragmental data on an unknown risk profile in a company, and weighs a feature value (e.g., 99.9% value at risk (VaR)) of the risk profile in the company from the input data. The data inputted into the risk weighing device generally includes interval loss data and scenario data. Internal loss data is data on a loss event having actually occurred in the company. Internal loss data shows what amount of loss has occurred with respect to what kind of event content. However, it is difficult to obtain a necessary and sufficient number of internal loss data with respect to all event contents. Thus, with respect to the content of an event which has rarely occurred or the content of an event which has not occurred yet, the frequency of occurrence and the estimation value of a loss amount are estimated as scenario data and utilized to weigh the amount of risk.

A general risk weighing device weighs VaR by a method called loss distribution approach (e.g., refer to Patent Document 1 and Non-Patent Document 1). To be specific, firstly, a risk weighing device generates a loss frequency distribution from the number of internal loss data and so on, and generates a loss scale distribution from internal loss data, scenario data and so on. Next, by Monte Carlo simulation, the risk weighing device repeatedly executes a process of taking out loss amounts of the number of loss caused by using the abovementioned loss frequency distribution from the loss scale distribution, totaling the loss amounts and calculating a loss mount per holding period ten-thousand or hundred-thousand times, thereby generating a loss amount distribution. Then, the risk weighing device calculates VaR in a predetermined confidence interval from this generated loss amount distribution.

In the field of analysis of risk, not limited to operational risk, the validity of a risk amount weighed by a risk weighing device is verified based on the total amount (an actual value) of loss having occurred actually. Such verification is called ex-post verification or a back test.

In ex-post verification, generally, by comparing a risk amount weighed by a risk weighing device with an actual value, the validity of the risk amount weighed by the risk weighing device is determined (refer to Non-Patent Document 2). For example, when a risk amount weighed by a risk weighing device is 99% VaR, this 99% VaR is compared with an actual value. Then, by repeatedly performing such comparison with a plurality of actual values obtained in the past and comparing the number of times of occurrence of an actual value exceeding the risk amount with a preset standard value, a verification result is obtained. For example, in the case of using N actual values, the abovementioned standard value is calculated based on hypothesis testing (significance level = $\beta$) on a binominal distribution (parameters: the number of trials = N, success rates = 1-$\alpha$).

More specifically, regarding market risk, 99% VaR calculated by an econometric model is verified with 250 actual values, and three kinds of verification results, "green zone: the number of times of exceeding is less than 5" "yellow zone: the number of times of exceeding is 5 or more and less than 10" and "red zone: the number of times of exceeding is 10 or more," are obtained. The standard values 5 and 10 are based on hypothesis testing with significance levels 5% and 0.1%, respectively.

Patent Document 1: Japanese Patent Publication No. 4241083

Non-Patent Document 1: Kobayashi, Shimizu, Nishiguchi, and Morinaga, "Operational Risk Management," Kinzai Institute for Financial Affairs, Inc., issued on April 24, 2009, pp. 107-144
Non-Patent Document 2: Response to Basel II," Kinzai Institute for Financial Affairs, Inc., issued on March 31, 2008, pp. 195-199

However, in the case of using the method of comparing a risk amount weighed by a risk weighing device with an actual value, it is impossible to perform effective ex-post verification when a confidence level $\alpha$ of VaR is high or when a number of pieces N of actual values is small.

This is because, when a confidence level $\alpha$ of VaR is high, an actual value exceeding the VaR rarely occurs. For example, because 99.9% VaR with a holding period of one year is a risk amount which is considered to occur once in every one thousand years, an actual value exceeding the VaR rarely occurs. Moreover, when the number N of actual values is small, the abovementioned standard values become 0.

### SUMMARY

An object of the present invention is to provide a risk management device which solves the abovementioned problem, that is, it is impossible to perform effective ex-post verification when a confidence level $\alpha$ of VaR is high or when the number N of actual values is small.

A risk management device according to an exemplary embodiment of the present invention includes:

a memory for storing actual total loss amounts of N periods; and

a processor connected to the memory,

wherein the processor is programmed to perform determination whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

Further, a risk management method according to another exemplary embodiment of the present invention is a risk management method executed by a risk management device including a memory for storing actual total loss amounts of N periods and a processor connected to the memory, and the risk management method includes:

by the processor, performing determination whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

With the configurations described above, the present invention enables effective ex-post verification even when a confidence level $\alpha$ of VaR is high or even when the number N of actual values is small.

BRIEF DESCRIPTION OF DRAWINGS

Fig. 1 is a block diagram of a risk management device according to a first exemplary embodiment of the present invention;

Fig. 2 shows an example of the configuration of interim information used in the first exemplary embodiment of the present invention;

Fig. 3 is a flowchart showing an example of processing in the first exemplary embodiment of the present invention;

Fig. 4 is a flowchart showing an example of processing by a determining unit in the first exemplary embodiment of the present invention;

Fig. 5 is a flowchart showing another example of the processing by the determining unit in the first exemplary embodiment of the present invention;

Fig. 6 is a block diagram of a risk management device according to a second exemplary embodiment of the present invention;

Fig. 7 is an example of the configuration of interim information used in the second exemplary embodiment of the present invention;

Fig. 8 is a flowchart showing an example of processing in the second exemplary embodiment of the present invention;

Fig. 9 is a flowchart showing an example of processing by a determining unit in the second exemplary embodiment of the present invention;

Fig. 10 is a flowchart showing another example of the processing by the determining unit in the second exemplary embodiment of the present invention;

Fig. 11 is a block diagram of a risk management device according to a third exemplary embodiment of the present invention;

Fig. 12 is a flowchart showing an example of processing in the third exemplary embodiment of the present invention; and

Fig. 13 is a view showing the result of calculation of maximum values in confidence intervals 0.95 and 0.99 of an $i^{th}$ (i = 1, 2, ..., N) smallest random variable among N independent and identically distributed random variables following a uniform distribution on an interval [0,1].

EXEMPLARY EMBODIMENTS

Before description of exemplary embodiments of the present invention, a distribution function of order statistics of a uniform distribution and hypothesis testing using order statistics will be described.

<Distribution Function of Order Statistics of Uniform Distribution>

Assuming that $U_1$, $U_2$, ..., $U_N$ are independent and identically distributed random variables following a uniform distribution on an interval [0,1], $U_{(1;N)}$, $U_{(2;N)}$, ..., $U_{(N;N)}$ are order statistics ($U_{(1;N)} < U_{(2;N)} ... < U_{(N;N)}$) of $U_1$, $U_2$, ..., $U_N$, and $F_u(\cdot)$ is a distribution function (because it is a distribution function of a uniform distribution on an interval [0,1], $F_u(u) = u(0 \leq u \leq 1)$) of $U_1$, $U_2$, ..., $U_N$, a distribution function $F_{u(n;N)}(\cdot)$ of $U_{(n;N)}$ is expressed by the following expression using $F_u(u)$:

$$F_{u(n;N)}(u) = \sum[i=n \text{ to } N]_N C_i \cdot F_u(u)^i \cdot (1 - F_u(u))^{N-i} \ldots \text{Expression 1}$$

where $\sum[i=1 \text{ to } N]a_i$ represents $a_1 + a_2 + ... + a_N$.

When $F_u(u)=u$ is substituted for Expression 1, the following expression is obtained:

$$F_{u(n;N)}(u) = \sum[i=n \text{ to } N]_N C_i \cdot u^i (1-u)^{N-i} \ldots \text{Expression 2}$$

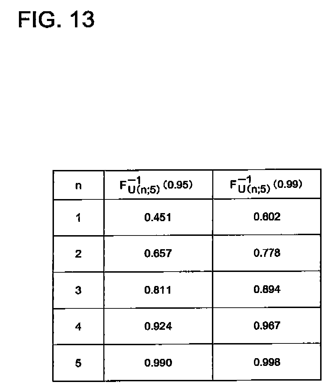

Accordingly, the maximum value in a confidence interval (1-$\alpha$) of an "$n^{th}$ smallest random variable among N random variables following a uniform distribution on an interval [0,1]" is expressed as $F^{-1}u_{(n;N)}(1-\alpha)$ by an inverse function of $F_{u(n;N)}(\cdot)$. Regarding $F^{-1}_{(n;N)}(0.95)$ and $F^{-1}_{u(n;N)}(0.99)$ corresponding to significance levels 5% and 1%, the calculation result when N=5 is shown in Fig. 13.

<Hypothesis Testing using Order Statistics>

Assuming that $X_1$, $X_2$, ..., $X_N$ are independent and identically distributed random variables, $X_{(1;N)}$, $X_{(2;N)}$, ..., $X_{(N;N)}$ are order statistics ($X_{(1;N)} < X_{(2;N)} < ... < X_{(N;N)}$ of $X_1$, $X_2$, ..., $X_N$, $x_1$, $x_2$, ..., $x_N$ are actual values of $X_1$, $X_2$, ..., $X_N$, and $x_{(1;N)}$, $x_{(2;N)}$, ..., $x_{(N;N)}$ are actual values of $X_{(1;N)}$, $X_{(2;N)}$, ..., $X_{(N;N)}$, it is thought to perform hypothesis testing with a significance level $\alpha$:

> null hypothesis: a distribution function of $X_1$, $X_2$, ..., $X_N$ is expressed as $F(\cdot)$, and
> alternative hypothesis: $X_1$, $X_2$, ..., $X_N$ are larger than random variables that a distribution function is expressed as $F(\cdot)$

by using an "$n^{th}$ smallest value $x_{(n;N)}$ among N actual values."

Assuming that $\{U_n\}$, $\{U_{(n;N)}\}$, $\{u_n\}$ and $\{u_{(n;N)}\}$ are obtained by applying $F(\cdot)$ to $\{X_n\}$, $\{X_{(n,N)}\}$, $\{x_n\}$ and $\{x_{(n;N)}\}$, respectively, when the null hypothesis is correct, $U_n(=F(X_n))$ follows a uniform distribution on an interval [0,1]. Therefore, a distribution of $U_{(n;N)}$ becomes identical to the "$n^{th}$ smallest random variable among the N random variables following the uniform distribution on the interval [0,1]." Then, in the case of testing by an "$n^{th}$ smallest value $_{X(n;N)}$ among N actual values," it becomes testing with a significance level $\alpha$ by employing the alternative hypothesis while discarding the null hypothesis for $u_{(n;N)}$ ($=F(x_{(n;N)})$) when the following expression is established:

$$u_{(n;N)} > F^{-1}_{u(n;N)}(1-\alpha) \ ... \ \text{Expression 3.}$$

Next, exemplary embodiments of the present invention will be described in detail with reference to the drawings.

[First Exemplary Embodiment]

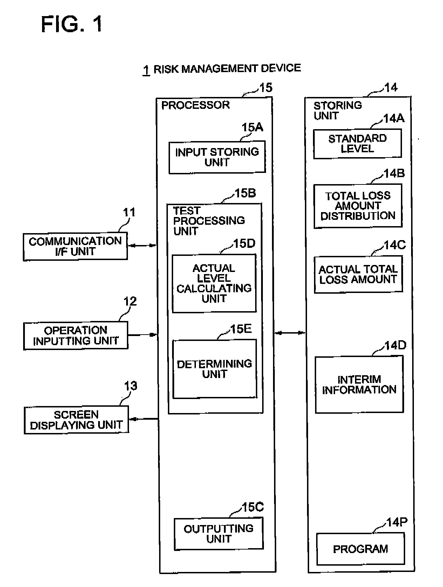

With reference to Fig. 1, a risk management device 1 according to a first exemplary embodiment of the present invention has a function of determining the validity of the result of weighing by the risk weighing device based on the total loss amount having occurred actually.

This risk management device 1 has a communication interface unit (referred to as a communication I/F unit hereinafter) 11, an operation inputting unit 12, a screen displaying unit 13, a storing unit 14, and a processor 15, as major function units.

The communication I/F unit 11 is formed by a dedicated data communication circuit, and has a function of performing data communication with various types of devices, which are not shown in the drawings, connected via communication lines (not shown in the drawings).

The operation inputting unit 12 is formed by an operation input device such as a keyboard and a mouse, and has a function of detecting an operation by an operator and outputting to the processor 15.

The screen displaying unit 13 is formed by a screen display device such as an LCD and a PDP, and has a function of displaying various kinds of information such as an operation menu and a determination result on a screen in accordance with instructions from the processor 15.

The storing unit 14 is formed by a storage device such as a hard disk and a semiconductor memory, and has a function of storing processing information necessary for various kinds of processing by the processor 15 and a program 14P. The program 14P, which is a program loaded into the processor 15 and executed to realize various kinds of processing units, is previously loaded from an external device (not shown) or a computer-readable storage medium (not shown) via a data input/output function such as the communication I/F 11, and is stored into the storing unit 14. Major processing information stored by the storing unit 14 is a standard level 14A, a total loss amount distribution 14B, an actual total loss amount 14C, and interim information 14D.

The standard level 14A is, assuming that the maximum value in a confidence interval ($1-\alpha$) of an $i^{th}$ (i = 1, 2, ..., N) smallest random variable of N independent and identically distributed random variables following a uniform distribution on an interval [0,1] is an $i^{th}$ standard level, data representing the $i^{th}$ standard level. There are N standard levels in total. As described in the explanation of a distribution function of order statistics of a uniform distribution, when N = 5 and $\alpha$ = 0.05, the standard level 14A includes data of 0.451, 0.657, 0.811, 0.924 and 0.990.

The total loss amount distribution 14B is data representing a total loss amount distribution of every period calculated by the risk weighing device. There are total loss amount distributions of N periods in total.

The actual total loss amount 14C is data representing the total loss amount having actually occurred. There are total loss amounts of N periods in total.

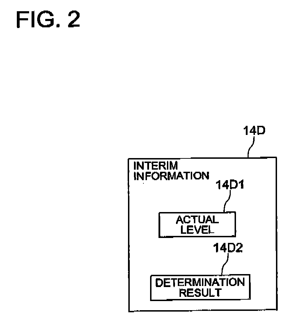

The interim information 14D is interim data or final data generated in the process of operation by the processor 15. Fig. 2 shows an example of the configuration of the interim information 14D. The interim information 14D in this example includes an actual level 14D1 and a determination result 14D2. The actual level 14D1 is data showing VaR of what percent confidence interval the actual total loss amount 14C in the total loss amount distribution 14B corresponds to. There are N actual levels in total. The determination result 14D2 is data showing a determination result of the validity of the result of weighing by the risk weighing device.

The processor 15 has a microprocessor such as a CPU and a peripheral circuit thereof, and has a function of loading the program 14P from the storing unit 14 and executing to make the hardware and the program 14P work in cooperation and realize various kinds of processing units. Major processing units realized by the processor 15 are an input storing unit 15A, a test processing unit 15B, and an outputting unit 15C.

The input storing unit 15A has a function of inputting therein the standard level 14A, the total loss amount distribution 14B and the actual total loss amount 14C from the communication I/F unit 11 or the operation inputting unit 12 and storing into the storing unit 14.

The test processing unit 15B has a function of determining whether order statistics of the actual level 14D1 showing the confidence interval of the actual total loss amount 14C in the total loss amount distribution 14B calculated by the risk weighing device follows a uniform distribution on an interval [0,1] by a goodness-of-fit test for a uniform distribution. This test processing unit 15B has an actual level calculating unit 15D and a determining unit 15E.

The actual level calculating unit 15D has a function of loading the total loss amount distribution 14B and the actual total loss amount 14C from the storing unit 14, calculating the actual level 14D1 showing the confidence interval of the actual total loss amount 14C in the total loss amount distribution 14B, and storing into the storing unit 14.

The determining unit 15E has a function of loading the actual level 14D1 and the standard level 14A from the storing unit 14, determining whether an $i^{th}$ largest actual level among the actual levels of N periods exceeds an $i^{th}$ largest standard level among the standard levels of N periods, and storing the determination result as the determination result 14D2 of the validity of the result of weighing by the risk weighing device into the storing unit 14.

The outputting unit 15C has a function of loading the determination result 14D2 from the storing unit 14, and outputting to the screen displaying unit 13 or outputting to the outside via the communication I/F unit 11.

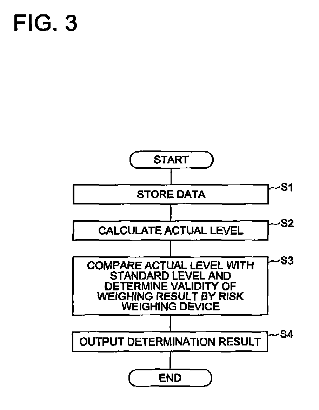

Next, with reference to Fig. 3, an operation of the risk management device 1 according to this exemplary embodiment will be described.

First, the input storing unit 15A inputs therein the standard level 14A, the total loss amount distribution 14B and the actual total loss amount 14C from the communication I/F unit 11 or the operation inputting unit 12, and stores into the storing unit 14 (step S1).

Next, the test processing unit 15B determines whether the order statistics of the actual level 14D1 showing the confidence interval of the actual total loss amount 14C in the total loss amount distribution 14B calculated by the risk weighing device follows an uniform distribution on an interval [0,1] by a goodness-of-fit test for a uniform distribution. To be specific, the following process is executed.

First, the actual level calculating unit 15D calculates the actual level 14D1 showing the confidence interval of the actual total loss amount 14C in the total loss amount distribution 14B (step S2). This process is equivalent to finding what percent VaR the total loss amount corresponds to. Next, the determining unit 15E compares the actual level 14D1 with the standard level 14A, and determines the validity of the result of weighing by the risk weighing device (step S3).

Subsequently, the outputting unit 15C outputs the determination result 14D2 to the screen displaying unit 13 or to the outside via the communication I/F unit 11 (step S4).

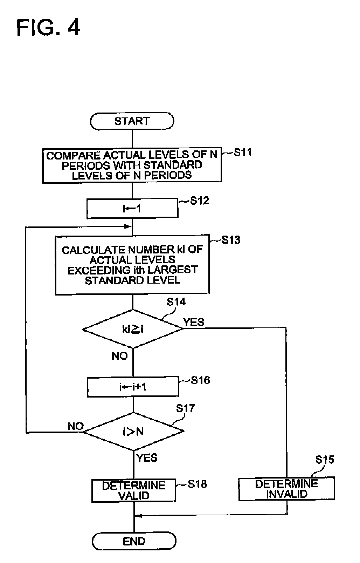

Fig. 4 is a flowchart showing an example of the process at step S3 executed by the determining unit 15E. With reference to Fig. 4, the example of processing by the determining unit 15E will be described below.

First, the determining unit 15E compares the actual levels 14D1 of N periods with the standard levels 14A of N periods (step S11). There are N comparison results for the standard level of each period, that is, $N \times N$ comparison results in total. Next, the determining unit 15E resets a variable i to 1 (step S12), and calculates a number of pieces k1 of actual standards exceeding a first largest standard level from the comparison results (step S13). Next, the determining unit 15E compares the number k1 with 1 (step S14). In a case that the number k1 is 1 or more, the determining unit 15E determines that the result of weighing by the risk weighing device is invalid (step S 15).

In a case that the number k1 is not 1 or more, the determining unit 15E increments the variable i (step S16), confirms that i does not exceed N (step S17), and returns to the process at step S 13. Thus, the determining unit 15E next calculates a number k2 of the actual standards exceeding a second largest standard level and determines whether the number k2 is 2 or more. In a case that k2 is 2 or more, the determining unit 15E determines that the result of weighing by the risk weighing device is invalid, whereas in a case that k2 is less than 2, the determining unit 15E proceeds to the determination regarding a third one. Thus, the determining unit 15E calculates a number kN of the actual standards exceeding an $N^{th}$ largest standard level and determines whether the number kN is N or more and, at a time point of determining that kN is less than N, determines that the result of weighing by the risk weighing device is valid (step S18).

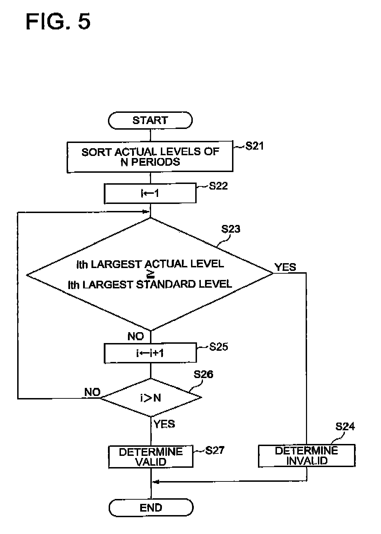

Fig. 5 is a flowchart showing another example of the process at step S3 executed by the determining unit 15E. With reference to Fig. 5, another example of the processing by the determining unit 15E will be described below.

First, the determining unit 15E sorts the actual levels 14D1 of N periods in decreasing order of values thereof (step S21). Next, the determining unit 15E resets the variable i to 1 (step S22), and compares a first largest actual level with a first largest standard level (step S23). In a case that the first largest actual level is equal to or more than the first largest standard level, the determining unit 15E determines that the result of weighing by the risk weighing device is invalid (step S24).

In a case that the first largest actual level is less than the first largest standard level, the determining unit 15E increments the variable i (step S25), confirms that i does not exceed N (step S26), and returns to the process at step S23. Thus, the determining unit 15E next determines whether a second largest actual level is equal to or more than a second largest standard level. In a case that the second largest actual level is equal to or more than the second largest standard level, the determining unit 15E determines that the result of weighing by the risk weighing device is invalid, whereas in a case that the second largest actual level is less than the second largest standard level, the determining unit 15E proceeds to the determination regarding a third one. Thus, the determining unit 15E determines whether an $N^{th}$ largest actual level is equal to or more than an $N^{th}$ largest standard level and, at a time point of determining the $N^{th}$ largest actual level is not equal to or more than the $N^{th}$ largest standard level, determines that the result of weighing by the risk weighing device is valid (step S27).

Accordingly in this exemplary embodiment, by utilizing that actual levels follow a uniform distribution on an interval [0,1] when a risk weighing device is valid, the validity of the result of weighing by the risk weighing device is determined based on an actual total loss amount. Therefore, even when the confidence level $\alpha$ of VaR is high or even when the number N of actual values is small, it is possible to perform effective ex-post verification.

[Second Exemplary Embodiment]

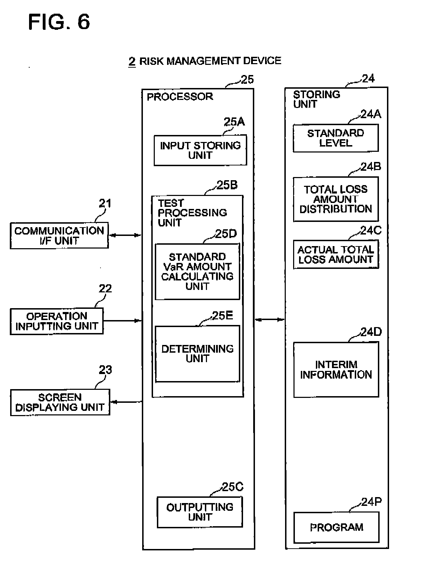

With reference to Fig. 6, a risk management device 2 of a second exemplary embodiment of the present invention has a function of determining the validity of the result of weighing by the risk weighing device based on the total loss amount actually occurred, as well that of the first exemplary embodiment.

This risk management device 2 has a communication I/F unit 21, an operation inputting unit 22, a screen displaying unit 23, a storing unit 24, and a processor 25, as major function units.

The communication I/F unit 21, the operation inputting unit 22 and the screen displaying unit 23 have the same functions as the communication I/F unit 11, the operation inputting unit 12 and the screen displaying unit 13 shown in Fig. 1 in the first exemplary embodiment.

The storing unit 24 is formed by a storage device such as a hard disk and a semiconductor memory, and has a function of storing processing information necessary for various kinds of processing by the processor 25 and a program 24P. The program 24P, which is a program loaded into the processor 25 and executed to realize various kinds of processing units, is previously loaded from an external device (not shown) or a computer-readable storage medium (not shown) via a data input/ output function such as the communication I/F 21, and is stored into the storing unit 24. Major processing information stored by the storing unit 24 is a standard level 24A, a total loss amount distribution 24B, an actual total loss amount 24C, and interim information 24D.

The standard level 24A, the total loss amount distribution 24B and the actual total loss amount 24C are the same as the standard level 14A, the total loss amount distribution 14B and the actual total loss amount 14C shown in Fig. 1 in the first exemplary embodiment

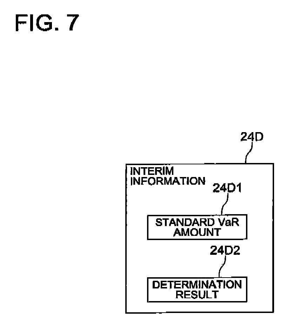

The interim information 24D is interim data or final data generated in the process of operation by the processor 25. Fig. 7 shows an example of the configuration of the interim information 24D. The interim information 24D in this example includes a standard VaR amount 24D1 and a determination result 24D2.

The standard VaR amount 24D1 is a VaR amount corresponding to the standard level 24A in the total loss amount distribution 24B. Because there are total loss amount distributions of N periods and there are N standard levels 24A, there are N×N standard VaR amounts in total. The determination result 24D2 is data showing the determination result of the validity of the result of weighing by the risk weighing device.

The processor 25 has a microprocessor such as a CPU and a peripheral circuit thereof, and has a function of loading the program 24P from the storing unit 24 and executing to make the hardware and the program 24P work in cooperation and realize various kinds of processing units. Major processing units realized by the processor 25 are an input storing unit 25A, a test processing unit 25B, and an outputting unit 25C.

The input storing unit 25A has a function of inputting therein the standard level 24A, the total loss amount distribution 24B and the actual total loss amount 24C from the communication I/F unit 21 or the operation inputting unit 22, and storing into the storing unit 24.

Like the test processing unit 15B in the first exemplary embodiment, the test processing unit 25B has a function of determining whether actual levels each showing a confidence interval of the actual total loss amount 24C in the total loss amount distribution 24B calculated by the risk weighing device follow a uniform distribution on an interval [0,1] by a goodness-of-fit test using order statistics for a uniform distribution. Although the test processing unit 15B in the first exemplary embodiment calculates an actual level corresponding to a total loss amount and compares with a standard level, the test processing unit 25B in this exemplary embodiment performs the abovementioned test by calculating a total loss amount corresponding to a standard level as a standard VaR amount and comparing an actual loss mount with the standard VaR amount. This test processing unit 25B has a standard VaR amount calculating unit 25D and a determining unit 25E.

The standard VaR amount calculating unit 25D has a function of loading the total loss amount distribution 24B and the standard level 24A from the storing unit 24, calculating a total loss amount corresponding to a standard level in the total loss amount distribution 24B as the standard VaR amount 24D1, and storing into the storing unit 24.

The determining unit 25E has a function of loading the actual total loss amount 24C and the standard VaR amount 24D1 from the storing unit 24, determining whether actual total loss amounts of N periods are equal to or more than standard VaR amounts corresponding to the N standard levels corresponding thereto, determining with respect to how many standard VaR amounts each of the total loss amounts equals or exceeds (i.e., with respect to a standard exceeding number) whether a standard exceeding number for an $i^{th}$ largest standard level is equal to or more than i, and storing the determination result as the determination result 24D2 of the validity of the result of weighing by the risk weighing device into the storing unit 24.

The outputting unit 25C has a function of loading the determination result 24D2 from the storing unit 24, and outputting to the screen displaying unit 23 or outputting to the outside via the communication I/F unit 21.

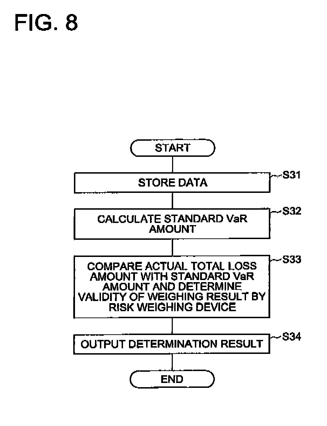

Next, with reference to Fig. 8, an operation of the risk management device 2 according to this exemplary embodiment will be described.

First, the input storing unit 25A inputs therein the standard level 24A, the total loss amount distribution 24B and the actual total loss amount 24C from the communication I/F unit 21 or the operation inputting unit 22, and stores into the storing unit 24 (step S31).

Next, the test processing unit 25B determines whether order statistics of the actual level showing the confidence interval of the actual total loss amount 24C in the total loss amount distribution 24B calculated by the risk weighing device follows a uniform distribution on an interval [0,1] by a goodness-of-fit test for a uniform distribution. To be specific, the following process is executed.

First, the standard VaR amount calculating unit 25D calculates the total loss amount corresponding to the standard level 24A in the total loss amount distribution 24B as the standard VaR amount 24D1 (step S32). For example, assuming that the standard levels are 0.451, 0.657, 0.811, 0.924 and 0.990, this process is equivalent to finding 45.1% VaR, 65.7% VaR, 81.1% VaR, 92.4% VaR and 99.0% VaR from the respective total loss amount distributions. Next, the determining unit 25E compares the actual total loss amount 24C with the standard VaR amount 24D1, and determines the validity of the result of weighing by the risk weighing device (step S33).

Subsequently, the outputting unit 25C outputs the determination result 24D2 by the determining unit 25E to the screen displaying unit 23, or to the outside via the communication I/F unit 21 (step S34).

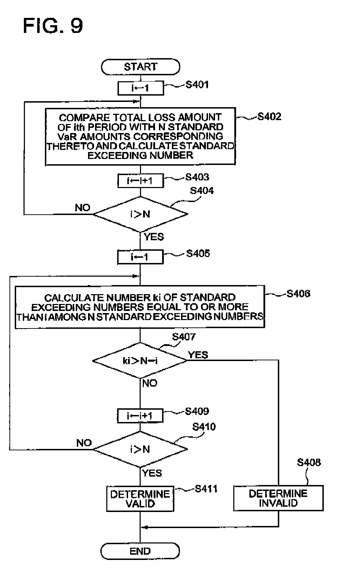

Fig. 9 is a flowchart showing an example of the process at step S33 executed by the determining unit 25E. With reference to Fig. 9, an example of processing by the determining unit 25E will be described below.

First, the determining unit 25E compares the total loss amounts 24C of N periods with the standard VaR amounts 24D1 of N periods, thereby calculating how many standard VaR amounts each of the total loss amounts equals or exceeds (i.e., calculating a standard exceeding number) (steps S401 to S404). Because a total loss amount of each period is compared with the N standard levels, the comparison is performed N×N times in total. Next, the determining unit 25E resets the variable i to 1 (step S405), and calculates a number k1 of standard exceeding numbers equal to or more than 1 among the N standard exceeding numbers from the comparison result (step S406). Next, the determining unit 25E compares the number k1 with a value of N-i, that is, a value of N-1 because i=1 in this case (step S407). When the number k1 exceeds N-1, the determining unit 25E determines that the result of weighing by the risk weighing device is invalid (step S408).

When the number k1 does not exceed N-1, the determining unit 25E increments the variable i (step S409), confirms that i does not exceed N (step S410), and returns to the process at step S406. Thus, the determining unit 25E next calculates a number k2 of standard exceeding numbers equal to or more than 2 among the N standard exceeding numbers, and determines whether the number k2 is equal to or more than N-2. In a case that k2 exceeds N-2, the determining unit 25E determines that the result of weighing by the risk weighing device is invalid, whereas in a case that k2 does not exceed N-2, the determining unit 25E proceeds to the determination on a third one. Thus, the determining unit 25E calculates a number kN of standard exceeding numbers equal to or more than N among the N standard exceeding numbers, and determines whether the number kN exceeds 1 and, at a time point of determining the number kN does not exceed 1, determines that the result of weighing by the risk weighing device is valid (step S411).

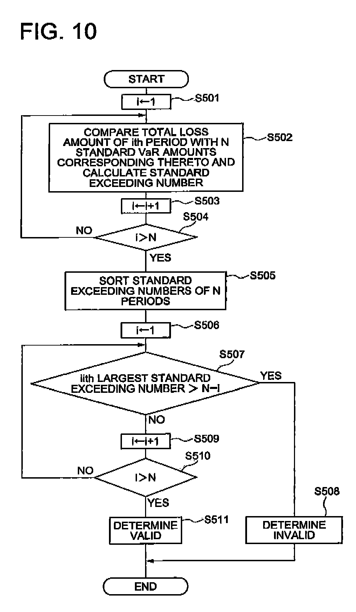

Fig. 10 is a flowchart showing another example of the process at step S33 executed by the determining unit 25E. With reference to Fig. 10, another example of the processing by the determining unit 25E will be described below.

First, the determining unit 25E compares the total loss amounts 24C of N periods with the standard VaR amounts 24D1 of N periods, and calculates how many standard VaR amounts each of the total loss amounts equals or exceeds (i.e., calculates a standard exceeding number) (steps S501 to S504). Because a total loss amount of each period is compared with the N standard levels, the comparison is performed N×N times in total.

Next, the determining unit 25E sorts the standard exceeding numbers of N periods (step S505). The determining unit 25E resets the variable i to 1 (step S506), and compares a first largest standard exceeding number with a value of N-i, that is, N-1 because i=1 in this case (step S507). In a case that the first largest standard exceeding number exceeds N-1, the determining unit 25E determines that the result of weighing by the risk weighing device is invalid (step S508). In a case that k1 does not exceed the value of N-i, the determining unit 25E increments the variable i (step S509), confirms that i does not exceed N (step S510), and returns to the process at step S507. Thus, the determining unit 25E next determines whether a second largest standard exceeding number exceeds N-2. If the second largest standard exceeding number exceeds N-2, the determining unit 25E determines that the result of weighing by the risk weighing device is invalid, whereas if not, the determining unit 25E proceeds to the determination on a third one. Thus, the determining unit 25E determines whether an $N^{th}$ largest standard exceeding number exceeds 1 and, at a time point of determining that the $N^{th}$ largest standard exceeding number does not exceed 1, determines that the result of weighing by the risk weighing device is valid (step S511).

Accordingly, in this exemplary embodiment, the validity of the weighing result by a risk weighing device is determined based on an actual total loss amount by utilizing that actual levels follow a uniform distribution on an interval [0,1] when the risk weighing device is valid. Therefore, even when a confidence level $\alpha$ of VaR is high or even when the number N of actual values is small, it is possible to perform effective ex-post verification.

Further, unlike the first exemplary embodiment, this exemplary embodiment has an advantage that it is not necessary to calculate an actual level representing what percent VaR amount of a total loss amount distribution an actual total loss amount corresponds to.

[Third Exemplary Embodiment]

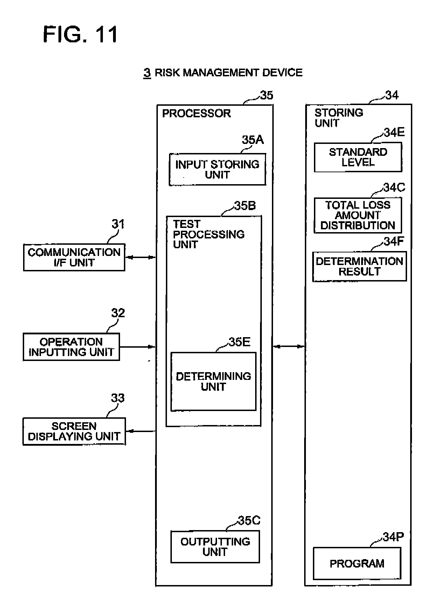

With reference to Fig. 11, a risk management device 3 of a third exemplary embodiment of the present invention has a function of determining the validity of the result of weighing by the risk weighing device based on the total loss amount having occurred actually, as well as that of the second exemplary embodiment.

This risk management device 3 has, as major function units, a communication I/F unit 31, an operation inputting unit 32, a screen displaying unit 33, a storing unit, and a processor 35.

The communication I/F unit 31, the operation inputting unit 32 and the screen displaying unit 33 have the same functions as the communication I/F unit 21, the operation inputting unit 22 and the screen displaying unit 23 shown in Fig. 6 in the second exemplary embodiment.

The storing unit 34 is formed by a storage device such as a hard disk and a semiconductor memory, and has a function of storing processing information necessary for various kinds of processes by the processor 35 and a program 34P. The program 34P, which is a program loaded into the processor 35 and executed to realize various kinds of processing units, is previously loaded from an external device (not shown) or a computer-readable storage medium (not shown) via a data input/output function such as the communication I/F 31, and is stored into the storing unit 34. Major processing information stored by the storing unit 34 is an actual total loss amount 34C, a standard VaR amount 34E, and a determination result 34F.

The standard VaR amount 34E is, assuming that the maximum value in a confidence interval (1-$\alpha$) of an $i^{th}$ (i = 1, 2 ..., N) largest random variable among N independent and identically distributed random variables following a uniform distribution on an interval [0,1] is an $i^{th}$ standard level, data representing a VaR amount corresponding to the $i^{th}$ standard level in a total loss amount distribution of each period calculated by the risk weighing device. This standard VaR amount 34E is equivalent to the standard VaR amount 24D1 calculated by the standard VaR amount calculating unit 25D in the second exemplary embodiment.

The actual total loss amount 34C is the same as the actual total loss amount 24C in the second exemplary embodiment.

The determination result 34F is data generated in the process of operation by the processor 35. This determination result 34F shows the determination result of the validity of the weighing result by the risk weighing device.

The processor 35 has a microprocessor such as a CPU and a peripheral circuit thereof, and has a function of loading the program 34P from the storing unit 34 and executing to make the hardware and the program 34P work in cooperation and realize various kinds of processing units. Major processing units realized by the processor 35 are an input storing unit 35A, a test processing unit 35B, and an outputting unit 35C.

The input storing unit 35A has a function of inputting therein the standard VaR amount 34E and the actual total loss amount 34C from the communication I/F unit 31 or the operation inputting unit 32, and storing into the storing unit 34.

Like the test processing unit 25B in the second exemplary embodiment, the test processing unit 35B has a function of determining whether actual levels each showing a confidence interval of the actual total loss amount 34C in a total loss amount distribution calculated by the risk weighing device follow a uniform distribution on an interval [0,1] by a goodness-of-fit test using order statistics for a uniform distribution. This test processing unit 35B has a determining unit 35E.

The determining unit 35E has a function of loading the actual total loss amount 34C and the standard VaR amount 34E from the storing unit 34, determining whether actual total loss amounts of N periods are equal to or more than standard VaR amounts corresponding to N standard levels corresponding thereto, determining with respect to how many standard VaR amounts each of the total loss amounts equals or exceeds (i.e., with respect to a standard exceeding number) whether a standard exceeding number for an $i^{th}$ largest standard level is i or more, and storing the determination result as the determination result 34F of the validity of the result of weighing by the risk weighing device into the storing unit 34.

The outputting unit 35C has a function of loading the determination result 34F from the storing unit 34, and outputting to the screen displaying unit 33 or outputting to the outside via the communication I/F unit 31.

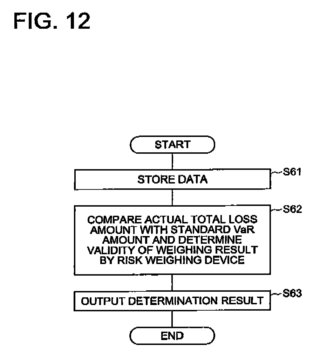

Next, with reference to Fig. 12, an operation of the risk management device 3 according to this exemplary embodiment will be described.

First, the input storing unit 35A inputs therein the actual total loss amount 34C and the standard VaR amount 34E from the communication I/F unit 31 or the operation inputting unit 32, and stores into the storing unit 34 (step S61).

Next, the test processing unit 35B determines whether the actual levels each showing the confidence interval of the actual total loss amount 34C in the total loss amount distribution calculated by the risk weighing device follow a uniform distribution on an interval [0,1] by a goodness-of-fit test using order statistics for a uniform distribution. To be specific, the determining unit 35E compares the actual total loss amount 34C with the standard VaR amount 34E, and determines the validity of the result of weighing by the risk weighing device (step S62). This step S62 is executed in a similar procedure to the procedure described with reference to Fig. 9 or 10 in the second exemplary embodiment.

Next, the outputting unit 35C outputs the determination result 34F by the determining unit 35E to the screen displaying unit 33 or to the outside via the communication I/F unit 31 (step S63).

Thus, in this exemplary embodiment, by utilizing that actual levels follow a uniform distribution on an interval [0,1] when a risk weighing device is valid, the validity of the result of weighing by the risk weighing device is determined based on an actual total loss amount. Therefore, it is impossible to perform effective ex-post verification even when a confidence level $\alpha$ of VaR is high or even when the number N of actual values is small. In particular, this exemplary embodiment is preferable when a standard VaR amount is calculated outside.

Although the present invention has been described above with exemplary embodiments, the present invention is not limited to the exemplary embodiments, and various additions and changes can be applied thereto. For example, the present invention can also be applied to risk other than operational risk, such as credit risk relating to margin trading such as loan service and market risk relating to exchange and interest trading.

The present invention is based upon and claims the benefit of priority from Japanese patent application No. 2011-072743, filed on March 29, 2011, the disclosure of which is incorporated herein in its entirety by reference.

INDUSTRIAL APPLICABILITY

The present invention can be utilized for statistical verification of the validity of the result of weighing by a risk weighing device based on the total loss amount having occurred actually, for example.

The whole or part of the exemplary embodiments disclosed above can be described as, but not limited to, the following supplementary notes.

(Supplementary Note 1)

A risk management device comprising:

a storing means for storing actual total loss amounts of N periods; and
a test processing means for performing determination whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

(Supplementary Note 2)

The risk management device according to Supplementary Note 1, wherein:

the storing means is configured to, assuming that a maximum value in a confidence interval (1-$\alpha$) of an $i^{th}$ (i = 1, 2, ..., N) largest random variable among N independent and identically distributed random variables following a uniform distribution on an interval [0,1] is an $i^{th}$ standard level, further store $i^{th}$ standard levels and total loss amount distributions of N periods weighed by the risk weighing device; and
the test processing means includes:

an actual level calculating means for calculating actual levels of N periods showing the confidence intervals of the actual total loss amounts in the total loss amount distribution; and
a determining means for performing determination whether an $i^{th}$ largest actual level among the actual levels of the N periods exceeds an $i^{th}$ largest standard level among the standard levels.

(Supplementary Note 3)

The risk management device according to Supplementary Note 2, wherein the determining means is configured to compare the actual levels of the N periods with the standard levels, and perform determination whether a number of the actual levels exceeding the $i^{th}$ largest standard level among the standard levels is equal to or more than i.

(Supplementary Note 4)

The risk management device according to Supplementary Note 2, wherein the determining means is configured to sort the actual levels of the N periods, compare the $i^{th}$ largest actual level among the actual levels of the N periods with the $i^{th}$ largest standard level among the standard levels, and determine whether the $i^{th}$ largest actual level exceeds the $i^{th}$ largest standard level.

(Supplementary Note 5)

The risk management device according to Supplementary Note 1, wherein:

the storing means is configured to, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further store $i^{th}$ standard levels and total loss amount distributions of N periods weighed by the risk weighing device; and
the test processing means includes:

a standard VaR amount calculating means for calculating a VaR amount corresponding to the $i^{th}$ standard level in the total loss amount distribution of every period; and
a determining means for determining how many VaR amounts the total loss amount of each of the N periods exceeds among VaR amounts of the period.

(Supplementary Note 6)

The risk management device according to Supplementary Note 1, wherein:

the storing means is configured to, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further store a VaR amount corresponding to the $i^{th}$ standard level in the total loss amount distribution of every period weighed by the risk weighing device; and
the test processing means includes a determining means for determining how many VaR amounts the total loss amount of each of the N periods exceeds among VaR amounts of the period.

(Supplementary Note 7)

The risk management device according to Supplementary Note 5 or 6, wherein the determining means is configured to compare the total loss amounts of the N periods with the VaR amounts of the N periods, respectively, calculate numbers of the VaR amounts that the respective total loss amounts equal or exceed, and determine whether a number of the numbers equal to or more than i among the numbers of the N periods exceeds N-i.

(Supplementary Note 8)

The risk management device according to Supplementary Note 5 or 6, wherein the determining means is configured to compare the total loss amounts of the N periods with the VaR amounts of the N periods, respectively, calculate numbers of the VaR amounts that the respective total loss amounts equal or exceed, sort the numbers of the N periods, and determine whether an $i^{th}$ largest number exceeds N-i.

(Supplementary Note 9)

A risk management method executed by a risk management device including a storing means for storing actual total loss amounts of N periods and a test processing means,
the risk management method comprising:

by the test processing means, performing determination whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

(Supplementary Note 10)

A computer program comprising instructions for causing a computer having a memory for storing actual total loss amounts of N periods to function as:

a test processing means for determining whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

DESCRIPTION OF REFERENCE NUMERALS

| | |
|---|---|
| 1, 2, 3 | risk management device |
| 11, 21, 31 | communication I/F unit |
| 12, 22, 32 | operation inputting unit |
| 13, 23, 33 | screen displaying unit |
| 14, 24, 34 | storing unit |
| 15, 25, 35 | processor |

## Claims

1. A risk management device comprising:

   a memory for storing actual total loss amounts of N periods; and
   a processor connected to the memory,
   wherein the processor is programmed to perform determination whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

2. The risk management device according to Claim 1, wherein:

   the memory is configured to, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further store $i^{th}$ standard levels and total loss amount distributions of N periods weighed by the risk weighing device; and
   the processor is programmed to:

   calculate actual levels of N periods showing the confidence intervals of the actual total loss amounts in the total loss amount distribution; and
   perform determination whether an $i^{th}$ largest actual level among the actual levels of the N periods exceeds an $i^{th}$ largest standard level among the standard levels.

3. The risk management device according to Claim 2, wherein the processor is programmed to, in the determination, compare the actual levels of the N periods with the standard levels, and perform determination whether a number of the actual levels exceeding the $i^{th}$ largest standard level among the standard levels is equal to or more than i.

4. The risk management device according to Claim 2, wherein the processor is programmed to, in the determination, sort the actual levels of the N periods, compare the $i^{th}$ largest actual level among the actual levels of the N periods with the $i^{th}$ largest standard level among the standard levels, and determine whether the $i^{th}$ largest actual level exceeds the $i^{th}$ largest standard level.

5. The risk management device according to Claim 1, wherein:

   the memory is configured to, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further store $i^{th}$ standard levels and total loss amount distributions of N periods weighed by the risk weighing device; and
   the processor is programmed to:

   calculate a VaR amount corresponding to the $i^{th}$ standard level in the total loss amount distribution of every period; and
   determine how many VaR amounts the total loss amount of each of the N periods exceeds among VaR amounts of the period.

6. The risk management device according to Claim 1, wherein:

   the memory is configured to, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further store a VaR amount corresponding to the $i^{th}$ standard level in the total loss amount distribution of every period weighed by the risk weighing device; and
   the processor is programmed to determine how many VaR amounts the total loss amount of each of the N periods exceeds among VaR amounts of the period.

7. The risk management device according to Claim 5 or 6, wherein the processor is programmed to, in the determination, compare the total loss amounts of the N periods with the VaR amounts of the N periods, respectively, calculate numbers of the VaR amounts that the respective total loss amounts equal or exceed, and determine whether a number of the numbers equal to or more than i among the numbers of the N periods exceeds N-i.

8. The risk management device according to Claim 5 or 6, wherein the processor is programmed to, in the determination, compare the total loss amounts of the N periods with the VaR amounts of the N periods, respectively, calculate numbers of the VaR amounts that the respective total loss amounts equal or exceed, sort the numbers of the N periods, and determine whether an $i^{th}$ largest number exceeds N-i.

9. A risk management method executed by a risk management device including a memory for storing actual total loss amounts of N periods and a processor connected to the memory,
the risk management method comprising:

> by the processor, performing determination whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

10. The risk management method according to Claim 9, comprising:

> by the memory, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further storing $i^{th}$ standard levels and total loss amount distributions of N periods weighed by the risk weighing device; and
> by the processor:
>
>> calculating actual levels of N periods showing the confidence intervals of the actual total loss amounts in the total loss amount distribution; and
>> performing determination whether an $i^{th}$ largest actual level among the actual levels of the N periods exceeds an $i^{th}$ largest standard level among the standard levels.

11. The risk management method according to Claim 10, comprising:

> by the processor, in the determination, comparing the actual levels of the N periods with the standard levels, and performing determination whether a number of the actual levels exceeding the $i^{th}$ largest standard level among the standard levels is equal to or more than i.

12. The risk management method according to Claim 10, comprising:

> by the processor, in the determination, sorting the actual levels of the N periods, comparing the $i^{th}$ largest actual level among the actual levels of the N periods with the $i^{th}$ largest standard level among the standard levels, and determining whether the $i^{th}$ largest actual level exceeds the $i^{th}$ largest standard level.

13. The risk management method according to Claim 9, comprising:

> by the memory, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further storing $i^{th}$ standard levels and total loss amount distributions of N periods weighed by the risk weighing device; and
> by the processor:
>
>> calculating a VaR amount corresponding to the $i^{th}$ standard level in the total loss amount distribution of every period; and
>> determining how many VaR amounts the total loss amount of each of the N periods exceeds among VaR amounts of the period.

14. The risk management method according to Claim 9, comprising:

> by the memory, assuming that a maximum value in a confidence interval $(1-\alpha)$ of an $i^{th}$ (i = 1, 2, ..., N) largest random variable among N independent and identically distributed random variables following a uniform distribution on an interval [0,1] is an $i^{th}$ standard level, further storing a VaR amount corresponding to the $i^{th}$ standard level in the total loss amount distribution of every period weighed by the risk weighing device; and
> by the processor, determining how many VaR amounts the total loss amount of each of the N periods exceeds among VaR amounts of the period.

15. The risk management method according to Claim 13 or 14, comprising:

> by the processor, in the determination, comparing each of the total loss amounts of the N periods with the VaR amounts of the N periods, calculating numbers of the VaR amounts that the respective total loss amounts equal or exceed, and determining whether a number of the numbers equal to or more than i among the numbers of the N periods exceeds N-i.

16. The risk management method according to Claim 13 or 14, comprising:

> by the processor, in the determination, comparing each of the total loss amounts of the N periods with the VaR amounts of the N periods, calculating numbers of the VaR amounts that the respective total loss amounts equal or exceed, sorting the numbers of the N periods, and determining whether an $i^{th}$ largest number exceeds N-i.

**17.** A computer program comprising instructions for causing a processor connected to a memory for storing actual total loss amounts of N periods to perform operations including:

determining whether actual levels follow a uniform distribution on an interval [0,1], the actual levels showing confidence intervals of the actual total loss amounts in a total loss amount distribution calculated by a risk weighing device, by a goodness-of-fit test with order statistics for a uniform distribution.

# FIG. 1

1 RISK MANAGEMENT DEVICE

15 PROCESSOR

15A INPUT STORING UNIT

15B TEST PROCESSING UNIT

15D ACTUAL LEVEL CALCULATING UNIT

15E DETERMINING UNIT

15C OUTPUTTING UNIT

14 STORING UNIT

14A STANDARD LEVEL

14B TOTAL LOSS AMOUNT DISTRIBUTION

14C ACTUAL TOTAL LOSS AMOUNT

14D INTERIM INFORMATION

14P PROGRAM

11 COMMUNICATION I/F UNIT

12 OPERATION INPUTTING UNIT

13 SCREEN DISPLAYING UNIT

FIG. 2

14D

INTERIM
INFORMATION

14D1

ACTUAL
LEVEL

14D2

DETERMINATION
RESULT

FIG. 3

```
           ( START )
              |
   +---------------------+  ~S1
   |     STORE DATA      |
   +---------------------+
              |
   +---------------------+  ~S2
   | CALCULATE ACTUAL LEVEL |
   +---------------------+
              |
   +---------------------+  ~S3
   | COMPARE ACTUAL LEVEL WITH |
   |   STANDARD LEVEL AND      |
   |  DETERMINE VALIDITY OF    |
   | WEIGHING RESULT BY RISK   |
   |   WEIGHING DEVICE         |
   +---------------------+
              |
   +---------------------+  ~S4
   | OUTPUT DETERMINATION RESULT |
   +---------------------+
              |
           ( END )
```

# FIG. 4

START

COMPARE ACTUAL LEVELS OF N
PERIODS WITH STANDARD
LEVELS OF N PERIODS — S11

I←1 — S12

CALCULATE NUMBER ki OF
ACTUAL LEVELS
EXCEEDING ith LARGEST
STANDARD LEVEL — S13

S14

ki≧i — YES

NO

i←i+1 — S16

S17

i>N — NO

YES

DETERMINE
VALID — S18

DETERMINE
INVALID — S15

END

# FIG. 5

```
                    ┌──────────────┐
                    │    START     │
                    └──────┬───────┘
                           │
        ┌──────────────────┴──────────────┐ ─── S21
        │   SORT ACTUAL LEVELS OF         │
        │        N PERIODS                │
        └──────────────────┬──────────────┘
                           │
                  ┌────────┴────────┐ ─── S22
                  │      I←1        │
                  └────────┬────────┘
                           │
        ┌──────────────────┴──────────────┐
        │              ◆ S23              │
        │      Ith LARGEST ACTUAL LEVEL    │   YES
        │               ≥                  │────────┐
        │     Ith LARGEST STANDARD LEVEL   │        │
        └──────────────────┬──────────────┘        │
                         NO│                        │
                  ┌────────┴────────┐ ─── S25       │
                  │     i←i+1       │              │
                  └────────┬────────┘              │
                        S26│                        │
        NO      ┌──────────┴──────────┐            │
      ┌─────────│        i>N          │            │
      │         └──────────┬──────────┘            │
      │                 YES│                        │
      │         ┌──────────┴──────────┐ ─── S27    ┌┴──────────┐ ─── S24
      │         │     DETERMINE       │            │ DETERMINE │
      │         │       VALID         │            │  INVALID  │
      │         └──────────┬──────────┘            └┬──────────┘
      │                    │                        │
      │                    └────────────────────────┘
      │                    │
      │           ┌────────┴────────┐
      │           │      END        │
      │           └─────────────────┘
```

18

# FIG. 6

2 RISK MANAGEMENT DEVICE

PROCESSOR — 25

INPUT STORING UNIT — 25A

TEST PROCESSING UNIT — 25B

STANDARD VaR AMOUNT CALCULATING UNIT — 25D

DETERMINING UNIT — 25E

OUTPUTTING UNIT — 25C

STORING UNIT — 24

STANDARD LEVEL — 24A

TOTAL LOSS AMOUNT DISTRIBUTION — 24B

ACTUAL TOTAL LOSS AMOUNT — 24C

INTERIM INFORMATION — 24D

PROGRAM — 24P

COMMUNICATION I/F UNIT — 21

OPERATION INPUTTING UNIT — 22

SCREEN DISPLAYING UNIT — 23

FIG. 7

24D

INTERIM
INFORMATION    24D1

STANDARD VaR
AMOUNT
24D2

DETERMINATION
RESULT

FIG. 8

```
              ┌─────────────┐
              │    START    │
              └──────┬──────┘
         ┌───────────┴───────────┐
         │      STORE DATA       │────S31
         └───────────┬───────────┘
         ┌───────────┴───────────┐
         │ CALCULATE STANDARD VaR│────S32
         │        AMOUNT         │
         └───────────┬───────────┘
     ┌───────────────┴───────────────┐
     │  COMPARE ACTUAL TOTAL LOSS     │────S33
     │  AMOUNT WITH STANDARD VaR      │
     │  AMOUNT AND DETERMINE          │
     │  VALIDITY OF WEIGHING RESULT BY│
     │  RISK WEIGHING DEVICE          │
     └───────────────┬───────────────┘
     ┌───────────────┴───────────────┐
     │  OUTPUT DETERMINATION RESULT   │────S34
     └───────────────┬───────────────┘
              ┌───────┴─────┐
              │     END     │
              └─────────────┘
```

## FIG. 9

```
                    ┌──────────────┐
                    │    START     │
                    └──────┬───────┘
                      ┌────┴────┐
                      │  i←1    │────S401
                      └────┬────┘
         ┌─────────────────┴─────────────────┐
         │   COMPARE TOTAL LOSS AMOUNT        │──S402
         │   OF Ith PERIOD WITH N STANDARD    │
         │   VaR AMOUNTS CORRESPONDING        │
         │ THERETO AND CALCULATE STANDARD     │
         │       EXCEEDING NUMBER             │
         └─────────────────┬─────────────────┘
                      ┌─────┴─────┐
                      │  i←i+1    │──S403
                      └─────┬─────┘
                          S404
              NO      ╱───────────╲
         ┌────────────│    i>N     │
         │            ╲───────────╱
         │               YES
         │           ┌────┴────┐
         │           │  i←1    │──S405
         │           └────┬────┘
         │   ┌─────────────┴──────────────────┐
         │   │  CALCULATE NUMBER ki OF STANDARD │──S406
         │   │  EXCEEDING NUMBERS EQUAL TO OR MORE│
         │   │THAN I AMONG N STANDARD EXCEEDING NUMBERS│
         │   └─────────────┬──────────────────┘
         │               S407
         │        ╱───────────╲    YES
         │        │   ki>N-i    │──────────┐
         │        ╲───────────╱            │
         │            NO                   │
         │       ┌─────┴─────┐             │
         │       │  i←i+1    │──S409       │
         │       └─────┬─────┘             │
         │           S410                  │
         │   NO   ╱───────────╲            │
         └────────│    i>N     │           │
                  ╲───────────╱            │
                     YES                   │
                      │                 S408│
              ┌───────┴──────┐   ┌──────────┴───┐
              │  DETERMINE   │   │  DETERMINE   │
              │    VALID     │   │   INVALID    │
              └───────┬──────┘   └──────┬───────┘
                      │                 │
                      └────────┬────────┘
                         ┌─────┴──────┐
                         │    END     │
                         └────────────┘
```

## FIG. 10

```
                    ┌─────────────┐
                    │    START    │
                    └──────┬──────┘
                    ┌──────┴──────┐
                    │    I←1      │────S501
                    └──────┬──────┘
         ┌───────────►┌──────┴──────────────┐
         │            │ COMPARE TOTAL LOSS  │
         │            │ AMOUNT OF ith PERIOD│────S502
         │            │ WITH N STANDARD VaR │
         │            │ AMOUNTS CORRESPOND- │
         │            │ ING THERETO AND     │
         │            │ CALCULATE STANDARD  │
         │            │ EXCEEDING NUMBER    │
         │            └──────┬──────────────┘
         │            ┌──────┴──────┐
         │            │   I←I+1     │────S503
         │            └──────┬──────┘
         │                   │         S504
         │     NO     ┌──────┴──────┐
         └────────────│    I>N      │
                      └──────┬──────┘
                         YES │
                      ┌──────┴──────────┐
                      │ SORT STANDARD   │────S505
                      │ EXCEEDING       │
                      │ NUMBERS OF N    │
                      │ PERIODS         │
                      └──────┬──────────┘
                      ┌──────┴──────┐
                      │    I←1      │────S506
                      └──────┬──────┘
         ┌───────────►┌──────┴──────────┐       S507
         │            │ Iith LARGEST    │  YES
         │            │ STANDARD        │──────────┐
         │            │ EXCEEDING       │          │
         │            │ NUMBER > N−I    │          │
         │            └──────┬──────────┘          │
         │                NO │                     │
         │            ┌──────┴──────┐              │
         │            │   I←I+1     │────S509       │
         │            └──────┬──────┘              │
         │                   │      S510           │
         │     NO     ┌──────┴──────┐              │
         └────────────│    I>N      │              │
                      └──────┬──────┘              │
                         YES │                     │ S508
                      ┌──────┴──────┐       ┌──────┴──────┐
                      │  DETERMINE  │────S511│  DETERMINE  │
                      │   VALID     │       │   INVALID   │
                      └──────┬──────┘       └──────┬──────┘
                             │◄───────────────────┘
                      ┌──────┴──────┐
                      │    END      │
                      └─────────────┘
```

# FIG. 11

<u>3</u> RISK MANAGEMENT DEVICE

FIG. 12

```
        ┌─────────────┐
        (    START    )
        └─────────────┘
               │
    ┌──────────────────────┐ ~S61
    │      STORE DATA       │
    └──────────────────────┘
               │
    ┌──────────────────────┐ ~S62
    │ COMPARE ACTUAL TOTAL  │
    │ LOSS AMOUNT WITH      │
    │ STANDARD VaR AMOUNT   │
    │ AND DETERMINE         │
    │ VALIDITY OF WEIGHING  │
    │ RESULT BY RISK        │
    │ WEIGHING DEVICE       │
    └──────────────────────┘
               │
    ┌──────────────────────┐ ~S63
    │ OUTPUT DETERMINATION  │
    │        RESULT         │
    └──────────────────────┘
               │
        ┌─────────────┐
        (     END     )
        └─────────────┘
```

FIG. 13

| n | $F_{U(n;5)}^{-1}$ (0.95) | $F_{U(n;5)}^{-1}$ (0.99) |
|---|---|---|
| 1 | 0.451 | 0.602 |
| 2 | 0.657 | 0.778 |
| 3 | 0.811 | 0.894 |
| 4 | 0.924 | 0.967 |
| 5 | 0.990 | 0.998 |

## INTERNATIONAL SEARCH REPORT

| | International application No. |
|---|---|
| | PCT/JP2012/002003 |

### A. CLASSIFICATION OF SUBJECT MATTER
*G06Q10/06*(2012.01)i

According to International Patent Classification (IPC) or to both national classification and IPC

### B. FIELDS SEARCHED

Minimum documentation searched (classification system followed by classification symbols)
G06Q10/06

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | Yukinaga KUBOTA, "Shijo VaR Keisoku no Mondaiten to Parametric-ho ni yoru Kaizen", Institute for Monetary and Economic Studies, Bank of Japan Discussion Paper Series (2009 Nen Shurokubun), [online], 16 December 2009 (16.12. 2009), pages 1 to 42 | 1-17 |
| A | JP 2006-11492 A (Fuji Xerox Co., Ltd.), 12 January 2006 (12.01.2006), entire text; all drawings & US 2005/0283505 A1 | 1-17 |
| A | JP 2004-252893 A (Fujitsu Ltd.), 09 September 2004 (09.09.2004), entire text; all drawings (Family: none) | 1-17 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 10 April, 2012 (10.04.12) | 24 April, 2012 (24.04.12) |

| Name and mailing address of the ISA/<br>   Japanese Patent Office | Authorized officer |
|---|---|
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4241083 B

- JP 2011072743 A

**Non-patent literature cited in the description**

- **KOBAYASHI ; SHIMIZU ; NISHIGUCHI ; MORINA-GA.** Operational Risk Management. Kinzai Institute for Financial Affairs, Inc, 24 April 2009, 107-144

- Response to Basel II. Kinzai Institute for Financial Affairs, Inc, 31 March 2008, 195-199